# EUROPÄISCHE PATENTSCHRIFT

(11) **EP 2 089 207 B1**
(45) Veröffentlichungstag und Bekanntmachung des Hinweises auf die Patenterteilung: **30.05.2012**
(21) Anmeldenummer: 07803504.5
(22) Anmeldetag: 14.09.2007
(51) Int. Cl.: B29C 45/16, B29C 45/34, B29C 45/56

(54) **Verfahren und Vorrichtung zur Herstellung eines Verbundbauteils, insbesondere umfassend ein Spritzgussteil mit einer Polyurethan-Beschichtung**
Method and device for producing a composite component, in particular comprising an injection-moulded part with a polyurethane coating
Procédé et dispositif de fabrication d'un élément composite, qui comprend en particulier une pièce moulée par injection dotée d'un revêtement en polyuréthane

(30) Priorität: 12.10.2006 DE 102006048252
(43) Veröffentlichungstag der Anmeldung: 19.08.2009
(73) Patentinhaber: KraussMaffei Technologies GmbH, 80997 München (DE)
(72) Erfinder: GRUBER, Marco, 81247 München (DE)
(74) Vertreter: Zollner, Richard
(86) Internationale Anmeldenummer: PCT/EP2007/059737
(87) Internationale Veröffentlichungsnummer: WO 2008/043640

(56) Entgegenhaltungen:
- DE-A1- 2 461 925
- DE-C1- 19 650 854
- JP-A- 3 164 218
- US-A- 4 207 049
- "HOCHWERTIGE PREMIUM-OBERFLAECHE AUS SPRITZGIESS- UND REAKTIONSTECHNIK" KUNSTSTOFFE, MUENCHEN, DE, Bd. 10, 2004, Seiten 180-182,184,18, XP001205066 ISSN: 0023-5563

## Beschreibung

Bei der Herstellung von Verbundbauteilen ist es bereits bekannt, ein zunächst hergestelltes Bauteil mit einer weiteren Schicht, insbesondere einer Kunststoffschicht zu versehen.

Bei dem sogenannten Skin-Form-Verfahren (SkinForm = eingetragene Marke der Anmelderin) wie es in der Veröffentlichung "Hochwertige Premiumoberflächen aus Spritzgieß- und Reaktionstechnik", in der Fachzeitschrift Kunststoffe, Ausgabe 10/2004 dargestellt ist, wird dabei in einem ersten Schritt (Takt 1) ein Spritzgießteil in einem Spritzgieß- oder Spritzprägeverfahren hergestellt. Dieses Teil wird dann in einem weiteren Prozessschritt (Takt 2) mit einem Polyurethan-Material mit geringerer Viskosität im Vergleich zum Thermoplastmaterial überflutet. Dieser Überflutungsschritt findet in einer vergrößerten Kavität statt, in welche das im Takt 1 hergestellte Bauteil eingebracht ist, wobei das Überflutungsmaterial in dem Zwischenraum zwischen dem in die Kavität eingebrachten Bauteil und der Kavitätswand selbst eingespritzt wird.

Überdies sind auch Mehrkomponenten-Spritzgießverfahren bekannt, bei denen in verschiedenen. Schritten unterschiedliche Spritzgießmaterialien in jeweils andere Kavitäten eingespritzt werden. Je nach Ausbildung und Anordnung der Kavitäten können so ebenfalls Verbundteile hergestellt werden.

Neben den oben genannten Verfahren zur Herstellung von Verbundbauteilen sind noch Prägetechniken bei der Thermoplastverarbeitung bekannt. Bei solchen Prägetechniken werden im Schmelzezustand befindliche Materialien in eine zunächst vergrößerte Kavität eingebracht, die dann in einem Prägeschritt auf die Endgröße zusammengedrückt wird. Durch das Zusammendrücken wird das zunächst in der vergrößerten Kavität eingebrachte Material auseinandergedrückt und so in der gesamten Kavität verteilt. Diese Vorgehensweise hat den Vorteil, dass geringere Spritz- und Schließdrücke aufgebracht werden müssen. Überdies können auf diese Art und Weise besonders spannungsfreie Bauteile erzeugt werden.

Aus der US 4 207 049 ist eine Vorrichtung zur Beschichtung eines Kunststoffteiles bekannt, bei der in einer Kavität zunächst ein Spritzgießteil hergestellt und die so gefüllte Kavität nach dem Aushärten des Spritzgießteiles vergrößert wird. Dadurch, dass die Kavität gegenüber der Außenumgebung nahezu vollständig abgeschlossen ist, entsteht durch das Aufziehen ein Unterdruck im Flutungsspalt. In den entstehenden Spalt wird ein die spätere Oberfläche bildendes Material eingefüllt, wobei der Unterdruck den Flutungsvorgang unterstützt. Die Höhe des Unterdruckes hängt vom Maß des Aufziehens ab sowie von der Dichtigkeit des Flutungsspaltes gegenüber der Außenumgebung. Überdies verändert sich der Unterdruck während des Einbringens des Flutungsmaterials.

In der Zusammenfassung der JP 03164218 wie auch in der DE 24 61 925 sind Verfahren beschrieben, bei dem ebenfalls zunächst ein Spritzgussteil gebildet, die Kavität anschließend aufgezogen und unter Unterdruck in den durch das Aufziehen entstandenen Flutungsspalt ein Flutungsmaterial eingebracht wird. Dazu sind in beiden Fällen Entlüftungskanäle vorgesehen, über die der Unterdruck erzeugt wird. Über die Höhe des Unterdruckes wird keine Aussage enthalten.

Aufgabe der vorliegenden Erfindung ist es, ein Verfahren und eine Vorrichtung anzugeben, bei dem bzw. bei der bei der Herstellung eines qualitativ hochwertigen Verbundbauteils einerseits die Problematik der Entlüftung in Griff gebracht werden kann, ohne dass es jedoch einer nachteiligen Nachbearbeitung des Bauteils bedarf.

Diese Aufgabe wird durch die in den Ansprüchen 1 bzw. 12 angegebenen Merkmale verfahrensmäßig bzw. vorrichtungsmäßig gelöst.

Demgemäß ist ein Gedanke der vorliegenden Erfindung darin zu sehen, dass vor der Durchführung eines Prägeschritts mittels einer Vakuumeinrichtung zumindest ein geringfügiger Unterdruck in bestimmter Höhe in der vergrößerten Kavität, in der ein Trägerbauteil eingebracht ist, um es zu umfluten, hergestellt wird. Dabei wird der Unterdruck in der Kavität ermittelt. Dieses Vakuum stellt die gewünschte Entlüftung während der Einbringung des Flutungsmaterials sicher und beseitigt das Entlüftungsproblem beim Umgießprozess. Überdies ist es damit möglich, ein Niederdruckverfahren bei der Einbringung des Flutungsmaterials zu verwenden, was insgesamt zu einem geringeren Werkzeugverschleiß insbesondere im Bereich der Werkzeugtrennebene führt.

Ein weiterer Vorteil der vorliegenden Erfindung ist darin zu sehen, dass das Trägerbauteil mit einer sehr dünnen Schicht beschichtet werden kann. Im Gegensatz zu bisherigen Verfahren sind dabei keine eigenen Entlüftungskavitäten notwendig, die in einem Nachbearbeitungsschritt wieder entfernt werden müssten. Dadurch ergeben sich auch größere Designfreiheiten, die ansonsten bei der Verwendung von Entlüftungskavitäten notwendig werden. Neben einer Vermeidung einer Nacharbeit führt dies auch zu einem geringeren Materialverbrauch.

Überdies ist mit dem erfindungsgemäßen Vorgehen auch die Möglichkeit geschaffen, den PUR-Mischkopf in der Bauteilmitte anzusetzen, was man bisher aufgrund der Entlüftungsproblematik vermieden hat. So lassen sich auch Polyurethan-Schäume mit niedriger Dichte und dünnen Wandstärken herstellen. Der Grund hierfür liegt darin, dass das Flutungsmaterial die in der Kavität eingeschlossene Luft nicht erst verdrängen muss, so dass es besser und einfacher aufschäumen kann, da ein geringerer Werkzeuginnendruck vorliegt.

Die Ausgestaltungsmöglichkeiten des erfindungsgemäßen Verfahrens bzw. der für das erfindungsgemäße Verfahren verwendeten Vorrichtung sind vielfältig.

So ist es möglich, zunächst das Trägerbauteil mittels eines Spritzgieß- oder Spritzprägeprozesses mit Thermoplastmaterial herzustellen. Dies kann in einem sogenannten Takt 1 - also in einem ersten Zyklusschritt - passieren. Dieses Trägerbauteil kann dann in eine vergrößerte Kavität eines weiteren Werkzeugs eingebracht werden. Für diesen Umsetzschritt können Wendeplatten-, Drehtisch- oder Schiebetischvorrichtungen verwendet werden. Diese Vorrichtungen sind aus dem Stand der Technik an sich bekannt. Nach dem Einbringen des Trägerbauteils in das vergrößerte Werkzeug kann dieses bis auf eine vorgegebene Position geschlossen werden, so dass zwar eine gewisse Dichtheit des Raumes zwischen dem eingebrachten Trägerbauteil und der Kavitätswand gegenüber der Außenumgebung entsteht, dieser Raum gegenüber der Kavitätsgröße des fertigen Bauteils aber noch vergrößert ist. Vor einem Einbringen eines Flutungsmaterials, beispielsweise eines Polyurethan-Materials, wird nun über einen Vakuumkanal und eine Vakuumpumpe ein Unterdruck in der Kavität hergestellt. Dieser Unterdruck kann beispielsweise über eine vorbestimmte Zeit erzeugt werden. Wie vorgenannt bereits erwähnt wird der Unterdruck erfindungsgemäß bis zu einem bestimmten Wert erzeugt.

Nach der oben genannten Zeit bzw. dem oben genannten Unterdruckwert beginnt das Fluten des freien Raums in der Kavität durch Einspritzen des Flutungsmaterials, beispielsweise des Polyurethans. Gleichzeitig oder etwas verzögert mit dem Beginn des Einspritzens kann das Werkzeug durch entsprechende Beaufschlagung der Schließeinheit auf seine endgültige Größe verkleinert werden. Insofern wird während des Prägeschritts eine Schließkraft aufgebaut, die auch während einer eventuellen Nachdruckphase noch gehalten wird. Durch die "Entlüftung" der Kavität mittels des Vakuums können die oben genannten Vorteile erreicht werden.

Allgemein sind verschieden Ausgestaltungen des Einspritzens bzw. des Prägens möglich. So ist es möglich, den Injektionszeitpunkt für das Flutungsmaterial in Abhängigkeit vom Unterdruck in der Kavität zu starten. Dazu muss der Unterdruck gemessen und einer Steuerungsvorrichtung mitgeteilt werden. Der Prägevorgang selbst kann abhängig von der Injektionszeit gesteuert bzw. geregelt werden. Überdies ist es auch möglich, nach dem ersten Schließen des Werkzeugs und vor dem Anlegen des Vakuums ein Gasgemisch zur Erzielung einer Oberflächenaktivierung des Trägerbauteils in die Kavität über eine separate Düse einzuspritzen. Eine solche Aktivierung ist bei der Kombination mancher Thermoplast- und Polyurethan-Materialien notwendig, da ansonsten eine Haftung nicht sichergestellt ist. Der Vorteil dieser Vorgehensweise liegt darin, dass mit dem Erzeugen des Vakuums dieses Gas oder Gasgemisch auch gleich wieder abgesaugt werden kann. Evtl. kann das verwendete Gas auch wieder für eine erneute Nutzung zurückgewonnen werden.

Auch ist es möglich, während des Prägeprozesses das Werkzeug erst nochmals geringfügig zu öffnen, bevor es auf die endgültige Größe zusammengedrückt wird.

Dieser Schritt ist an sich bekannt und insbesondere dann wünschenswert, wenn eine bestimmte Positionierung des "Formkuchens" des Flutungsmaterials notwendig erscheint und dieses Material nicht abgleiten soll.

Weiter ist es alternativ möglich, die Schließeinheit in Abhängigkeit vom Injektionsdruck beim Flutungsvorgang zu schließen und/oder die Schließkraft entsprechend einem vorgegebenden Druckverlauf aufzubauen. Zu diesem Zweck kann der Druck in der Versorgungsleitung für das Flutungsmaterial erfasst und an eine Steuereinrichtung ausgegeben werden. Bei der Verwendung eines Polyurethan-Materials als Flutungsmaterial kann der Druck beispielsweise in einer Polyolleitung und/oder einer Isocyanatleitung und/oder einer Farb- oder Materialzugabeleitung erfasst werden.

Eine weitere Möglichkeit zur Durchführung des Verfahrens besteht darin, das Werkzeug während des Injektionsvorganges weg- bzw. kraftabhängig zu schließen oder die Schließkraft entsprechend aufzubauen. Damit können separate Sensoren vermieden werden.

Wie weiter oben bereits angegeben, können verschiedene Vorrichtungen zur Durchführung des Verfahrens verwendet werden. Zum einen ist es natürlich möglich, ein Trägerbauteil in einem eigenen Verfahren vorher herzustellen und zwischen zu lagern. Nach der Zwischenlagerung kann dieses Trägerbauteil einer Schließeinheit für den Flutungsschritt zugeführt werden. Dies würde jedoch bedeuten, dass man zwei Vorrichtungen benötigt, nämlich eine Vorrichtung für die Herstellung des Trägerbauteils und eine Vorrichtung für den Flutungsschritt. Überdies würde man eine Zwischenlagerungsmöglichkeit benötigten.

Günstig scheint sich die Verwendung von Wendeplatten-, Drehtisch- oder Schiebetischvorrichtungen anzubieten. So könnte zyklusgleich jeweils ein Trägerbauteil spritzgegossen und ein weiteres bereits spritzgegossenes Trägerbauteil überflutet werden. Bei einem solchen Vorgehen kann jedoch oder Spritzprozess oder der Spritzprägeprozess für den Thermoplastträger in der Regel erst dann geschehen, wenn die Schließkraft vollständig aufgebaut ist, also nach dem eigentlichen Prägevorgang. Dies bedeutet, dass man bei der zyklusgleichen Herstellung zunächst das Trägerbauteil in die vergrößerte Kavität einbringt, diese bis zur Prägeposition zufährt und nach der Evakuierung der vergrößerten Kavität den Prägeschritt durchführt. Nach der. Durchführung des Prägeschritts ist die Schließkraft vollständig aufgebaut. Dann kann gleichzeitig in einer weiteren Kavität bei einer Wendeplatten-, Drehtisch- oder Schiebetischvorrichtung der Spritzgießprozess für die Thermoplastträger erfolgen. Auf diese Art und Weise ist es möglich, bei jedem Zyklus ein Trägerbauteil sowie auch ein fertiges Verbundteil herzustellen.

Nachfolgen wird die vorliegende Erfindung anhand eines Ausführungsbeispiels und mit Bezug auf die einzige Zeichnung näher erläutert. Die Zeichnung zeigt in sehr schematischer Darstellung eine Drehtischanordnung, mit der das erfindungsgemäße Verfahren durchgeführt werden kann.

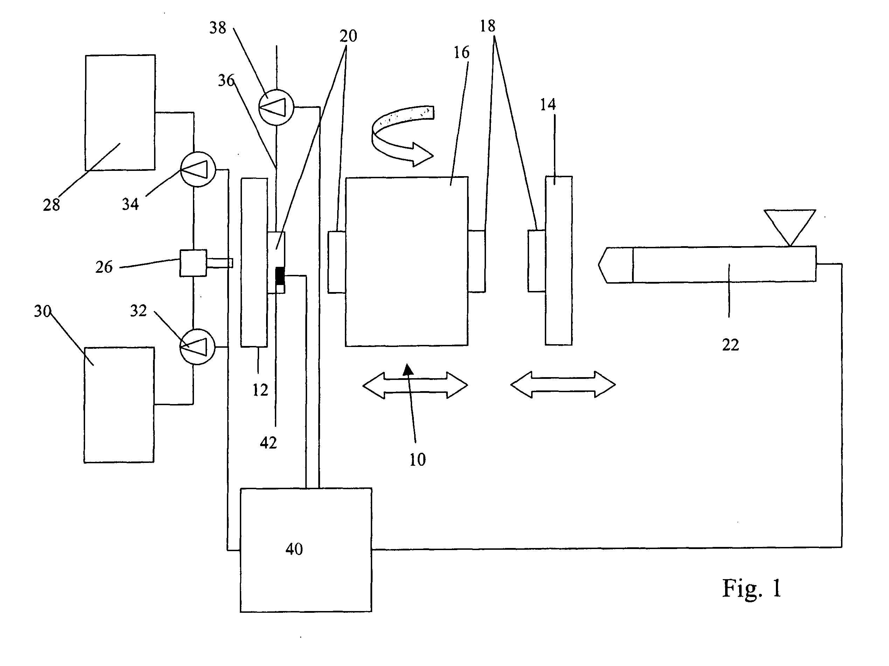

Die Figur 1 erlaubt in ihrer schematischen Art durchaus die Beschreibung des erfindungsgemäßen Verfahrens, auch wenn wesentliche Teile der Schließeinheit wie Zugübertragungselemente (Holme), Mechanismus zum Aufbau der Schließkraft, Maschinenbett, Drehantrieb, etc. nicht dargestellt sind. Diese Vorrichtungen oder Vorrichtungsteile bei einer Schließeinheit sind - genauso wie die entsprechenden Vorrichtungsteile bei einer Plastifizier- und Einspritzvorrichtung wie auch bei einer Polyurethanvorrichtung - hinlänglich bekannt und müssen nicht nochmals ausführlich erläutert werden.

Die Vorrichtung zur Durchführung des erfindungsgemäßen Verfahrens umfasst eine Schließeinheit 10 mit einer festen Aufspannplatte 12 und einer beweglichen Aufspannplatte 14, zwischen der eine ebenfalls axial bewegliche sowie um eine vertikale Achse drehbare Zwischenplatte 16 angeordnet ist. Sowohl an den Aufspannflächen der festen Aufspannplatte 12 wie der Zwischenplatte 16 wie auch zwischen der beweglichen Aufspannplatte 14 sowie der Zwischenplatte 16 sind Werkzeuge 20 und 18 bzw. deren Werkzeughälften in bekannter Weise angeordnet. Dabei sind die an der Zwischenplatte 16 angeordneten Werkzeughälften jeweils identisch ausgebildet.

In Figur 1 rechts von der Schließeinheit 10 ist eine Plastifizier- und Einspritzvorrichtung 22 angedeutet, mit der ein Kunststoffgranulat aufgeschmolzen und die so hergestellte Schmelze in die Kavität des geschlossenen Werkzeugs 18 eingedrückt werden kann.

Die Plastifizier- und Einspritzvorrichtung 22 ist mit einer Steuer- und Regeleinrichtung 40 verbunden, wobei die Verbindung nur die Ansteuerungsmöglichkeit der Plastifizier- und Einspritzvorrichtung 22 darstellen und die Anzahl der Verbindungsleitungen nicht beschränken soll. Bei der tatsächlichen Konstruktion mögen eine Vielzahl von Steuerleitungen zwischen der Steuer- und Regelvorrichtung 40 und der Plastifizier- und Einspritzvorrichtung 22 verlaufen. Ebenfalls sind die verschiedenen Antriebe im Bereich der Plastifizier- und Einspritzvorrichtung 22 vorliegend nicht dargestellt.

In Figur 1 links der Schleißeinheit 10 ist eine Polyurethan-Anlage mit einem Mischkopf 26 und zwei Behältern 28 und 30 für eine Polyol- und Isocyanatkomponente dargestellt, wobei die Behälter unter Zwischenschaltung von Pumpen 32, 34 mittels Leitungen mit dem Mischkopf 26 verbunden sind. Auch hier sind weitere Antriebe nicht dargestellt. Auch die Pumpen 32 und 34 sind über Steuerleitungen mit der Steuer- und Regelvorrichtung 40 verbunden.

Zudem ist mit dem linken Teil des Werkzeugs 20 eine Vakuumleitung 36 verbunden, die sich bis in den Bereich der Kavität erstreckt und mit einer Vakuumpumpe 38 die Luft aus dem später geschlossenen Werkzeug saugen kann. Die Vakuumpumpe 38 wiederum ist ebenfalls mit der Steuer- und Regeleinrichtung 40 gekoppelt.

In dem soeben erwähnten Werkzeug ist zudem noch ein Drucksensor 42 zur Ermittlung eines Unterdrucks vorgesehen, der so angeordnet ist, dass bei einem geschlossenen Werkzeug der Druck bzw. der Unterdruck in der Kavität ermittelt werden kann. Auch dieser Sensor 42 ist mit der Steuer- und Regeleinrichtung 40 verbunden.

Das mit dieser Vorrichtung durchgeführte Verfahren kann wie folgt beschrieben werden.

Ausgegangen wird zunächst von einer vollständig geleerten Schließeinheit, d.h. einer Schließeinheit 10, deren beiden Werkzeuge 18 und 20 leer und gesäubert sind. Dies ist der in Figur 1 dargestellte Zustand. Nach dem Anfahren der Maschine wird die Schließeinheit geschlossen, wobei sich auch die beiden Werkzeuge 18 und 20 zunächst schließen. Im vollständig geschlossenen Zustand und nach dem vollständigen Aufbringen des Schließdrucks wird dann in das Werkzeug 18 durch die herangefahrene Plastifizier- und Einspritzeinrichtung 22 eine Kunststoffschmelze in einem normalen Spritzgießvorgang eingebracht. Nach dem Aushärten des Materials ist das Trägerbauteil geformt und die Schließeinheit 10 kann wieder geöffnet werden. Nach dem Öffnen der Schließeinheit wird die Zwischenplatte 16 in Richtung des angegebenen Drehpfeils um 180° gedreht, so dass die Hälften der beiden Werkzeuge 18 und 20 nunmehr gegeneinander vertauscht sind. Dabei bleibt in der an der Zwischenplatte befestigten Werkzeughälfte des Werkzeugs 18 das Thermoplastteil enthalten und schwenkt um 180° mit. Nach dieser Rotationsbewegung ist das Werkzeug 18 wiederum leer, da sich zwei leere Werkzeughälften gegenüber stehen.

Im Werkzeug 20 ist nun bei geöffnetem Werkzeug in der Werkzeughälfte an der Zwischenplatte das vorher hergestellte Spritzgussteil enthalten. Nunmehr wird die Schließeinheit wieder geschlossen. Dabei wird beim Werkzeug 20 eine Position angefahren, die gegenüber der endgültigen Kavitätsgröße vergrößert ist. In dieser Position ist die Kavität gegenüber der Außenumgebung im Wesentlichen abgeschlossen, so dass in der Regel nur wenig Umgebungsluft in das Werkzeug eintreten kann. Durch den Betrieb der Vakuumpumpe 38 wird die Luft aus dem Raum zwischen dem in der vergrößerten Kavität eingebrachten Thermoplastbauteil und der Kavitätswand entfernt, und bei Erreichen eines bestimmten Unterdruckniveaus, der über den oben genannten Sensor 42 ermittelt wird, wird über den an das Werkzeug 20 herangefahrenen Mischkopf 26 ein Polyurethan-Material in die Kavität eingespritzt. Gleichzeitig wird die Vakuumpumpe abgestellt. Mit dem Beginn des Einspritzens wird das Werkzeug 20 durch Aufbringen der Schließkraft in einem Prägeschritt vollständig geschlossen, so dass sich das eingebrachte Material verprägt. Alternativ kann mit dem Prägeschritt gewartet werden, bis ein Großteil des Polyurethan-Materials oder das Gesamte Polyurethan-Material in die Kavität eingebracht ist.

Nach dem vollständigen Füllen und Verprägen des Polyurethan-Materials sowie dem Erreichen der endgültigen Schließposition wird der Prägevorgang beendet. Nunmehr ist die Schließkraft vollständig aufgebaut und auch das Werkzeug 18 wird mit der vollständigen Schließkraft zusammengehalten.

In diesem Zustand kann nunmehr auch das Thermoplast-Material in die Kavität des Werkzeugs 18 eingespritzt werden. Nach dem Aushärten sowohl des Thermoplast-Materials wie auch des Polyurethan-Materials in den Kavitäten der Werkzeuge 18 und 20 wird die Schließeinheit wieder geöffnet. In einem nächsten Schritt wird dann das fertig gestellte Bauteil aus dem Werkzeug 20 entnommen. Sodann kann die Zwischenplatte 16 wieder um 180° gedreht werden und weiterer Zyklusschritt, wie oben beschrieben, durchgeführt werden.

Natürlich ist es möglich, dieses Verfahren anstelle mit einer Wendeplattenmaschine mit einer Drehtisch- oder Schiebetischanwendung durchzuführen. Auch können, wie einleitend bereits erwähnt, andere Präge- oder Einspritzschritte durchgeführt werden. Ferner kann die Steuerung auf verschiedene Druck- oder Zeitsteuerung abgestellt sein. Bei einer Drucksteuerung muss natürlich ein entsprechender Sensor vorgesehen werden, mit dem ein solcher Druck auch ermittelt werden kann. Überdies ist es auch möglich, mittels verschiedener Vorrichtungen die Oberfläche des Thermoplastbauteils zu aktivieren. Dies kann durch Abflammen, Plasmabeaufschlagen oder Beaufschlagen mittels eines Gases erfolgen.

Diese Verfahren sind aus dem Stand der Technik hinlänglich bekannt. Besonders erwähnt werden sollte lediglich die Einleitung eines Gases mittels einer nicht dargestellten Düse in das geschlossene Werkzeug 20 der vergrößerten Kavität, wobei dieses Gas vor dem Füllschritt dann mittels der Vakuumpumpe wieder abgesaugt werden kann.

### Bezugszeichenliste

- 10: Schließeinheit
- 12: Feste Formaufspannplatte
- 14: Bewegliche Formaufspannplatte
- 16: Zwischenplatte
- 18: Erstes Formwerkzeug
- 20: Zweites Formwerkzeug
- 22: Plastifizier- und Einspritzeinheit
- 26: PUR-Mischkopf
- 28: Polyolbehälter
- 30: Isocyanatbehälter
- 32: Pumpe
- 34: Pumpe
- 36: Vakuumleitung
- 38: Vakuumpumpe
- 40: Steuerung
- 42: Drucksensor

## Patentansprüche

1. Verfahren zur Herstellung eines Verbundbauteils, insbesondere umfassend ein Spritzgussteil sowie ein Polyurethan-Element, mit den Schritten:
Herstellen eines Trägerbauteils,
Verbringen oder Umsetzen des Trägerbauteils in eine geöffnete Kavität eines Werkzeugs,
Schließen des Werkzeugs bis auf eine vorbestimmte Position, wobei eine vergrößerte Kavität mit einer ersten Größe geschaffen ist,
Erzeugen eines Vakuums bis zu einem vorbestimmten Unterdruck in der vergrößerten Kavität erster Größe, wobei der Druck oder der Unterdruck in der Kavität ermittelt wird,
Einfüllen eines Flutungsmaterials in die vergrößerte Kavität und
Durchführen eines Prägeschrittes gleichzeitig mit dem Einfüllen und/oder anschließend an das Einfüllen des Flutungsmaterials, wobei die Kavität zumindest geringfügig verkleinert wird.

2. Verfahren nach Anspruch 1,
**dadurch gekennzeichnet,**
**dass** das Herstellen des Trägerbauteils in einem Spritzgieß- oder Spritzprägeverfahren durchgeführt wird.

3. Verfahren nach Anspruch 1 oder 2,
**dadurch gekennzeichnet,**
**dass** als Flutungsmaterial eine Polyurethan-Material verwendet wird.

4. Verfahren nach einem der Ansprüche 1 bis 3,
**dadurch gekennzeichnet,**
**dass** das Vakuum für eine bestimmte Zeit erzeugt wird.

5. Verfahren nach einem der vorhergehenden Ansprüche,
**dadurch gekennzeichnet,**
**dass** der Prägeschritt gleichzeitig oder verzögert zum Einbringen des Flutungs-materials durchgeführt wird.

6. Verfahren nach einem der vorhergehenden Ansprüche,
**dadurch gekennzeichnet,**
**dass** der Injektionszeitpunkt für das Flutungsmaterial im Abhängigkeit vom Unterdruckwert gestartet wird.

7. Verfahren nach einem der vorhergehenden Ansprüche,
**dadurch gekennzeichnet,**
**dass** er Prägevorgang in Abhängigkeit vom Injektionszeit geregelt oder gesteuert wird.

8. Verfahren nach einem vorhergehenden Ansprüche,
**dadurch gekennzeichnet,**
**dass** vor der Erzeugung des Vakuums ein Medium zur Aktivierung der Oberfläche des Trägerbauteils in die Kavität eingeleitet wird.

9. Verfahren nach einem der vorhergehenden Ansprüche,
**dadurch gekennzeichnet,**
**dass** das Werkzeug vor dem eigentlichen Prägeschritt in einer vorbestimmten Weise geöffnet wird.

10. Verfahren nach einem der vorhergehenden Ansprüche,
**dadurch gekennzeichnet,**
**dass** der Prägeschritt in Abhängigkeit des Injektionsdruckes durchgeführt wird.

11. Verfahren nach einem der vorhergehenden Ansprüche,
**dadurch gekennzeichnet,**
**dass** der Prägeschritt weg- und kraftabhängig durchgeführt wird.

12. Vorrichtung zur Durchführung des Verfahrens gemäß den Ansprüchen 1 bis 11, umfassend eine Schließeinheit (12, 14, 16) mit zumindest einer Kavität, in die ein Trägerbauteil einbringbar ist, sowie einer Vorrichtung zur Einspritzung eines Flutungsmaterial (26) in die Kavität des zumindest teilweise geschlossenen Werkzeugs (20), wobei die Schließeinheit (12, 14, 16) zur Durchführung eines Prägeschrittes während und/oder nach dem Prägeschritt ausgebildet ist,
**dadurch gekennzeichnet,**
**dass** eine Vakuumeinrichtung (38) vorgesehen ist, um die Kavität des zumindest teilweise geschlossenen Werkzeugs (20) vor der Durchführung des Prägeschrittes mit einem Unterdruck zu beaufschlagen,
**dass** ein Sensor ((42) zur Ermittlung des Unterdruckes vorgesehen ist,
**dass** eine Steuer- und Regeleinrichtung (40) vorgesehen ist, die mit dem Sensor (42) und der Vakuumeinrichtung (38) verbunden ist.

## Claims

1. A method for the production of a composite component, in particular comprising an injection moulded part and a polyurethane element, with the steps:
producing a carrier component,
bringing or transferring the carrier component into an opened cavity of a mould,
closing the mould up to a predetermined position, wherein an enlarged cavity with a first size is created,
generating a vacuum up to a predetermined underpressure in the enlarged cavity of the first size, wherein the pressure or the underpressure in the cavity is determined,
filling a flooding material into the enlarged cavity and
carrying out an impression step simultaneously with the filling and/or following the filling of the flooding material, wherein the cavity is at least slightly reduced in size.

2. The method according to Claim 1,
**characterized in that**
the production of the carrier component is carried out in an injection moulding method or an injection impression method.

3. The method according to Claim 1 or 2,
**characterized in that**
a polyurethane material is used as flooding material.

4. The method according to one of Claims 1 to 3,
**characterized in that**
the vacuum is generated for a defined time.

5. The method according to one of the preceding claims,
**characterized in that**
the impression step is carried out simultaneously or with a delay for the introducing of the flooding material.

6. The method according to one of the preceding claims,
**characterized in that**
the time of injection for the flooding material is started as a function of the underpressure value.

7. The method according to one of the preceding claims,
**characterized in that**
the impression process is regulated or controlled as a function of the injection time.

8. The method according to one of the preceding claims,
**characterized in that**
before the generating of the vacuum, a medium for activating the surface of the carrier component is introduced into the cavity.

9. The method according to one of the preceding claims,
**characterized in that**
before the actual impression step, the mould is opened in a predetermined manner.

10. The method according to one of the preceding claims,
**characterized in that**
the impression step is carried out as a function of the injection pressure.

11. The method according to one of the preceding claims,
**characterized in that**
the impression step is carried out in a path- and force-dependent manner.

12. A device for carrying out the method according to Claims 1 to 11, comprising a clamping unit (12, 14, 16) with at least one cavity, into which a carrier component is able to be introduced, and with a device for the injecting of a flooding material (26) into the cavity of the at least partially closed mould (20), wherein the clamping unit (12, 14, 16) is constructed for carrying out an impression step during and/or after the impression step,
**characterized in that**
a vacuum arrangement (38) is provided, in order to act with an underpressure on the cavity of the at least partially closed mould (20) before the carrying out of the impression step,
a sensor (42) is provided for determining the underpressure,
a control- and regulating arrangement (40) is provided, which is connected with the sensor (42) and with the vacuum arrangement (38).

## Revendications

1. Procédé de fabrication d'un élément composite, qui comprend en particulier une pièce moulée par injection ainsi qu'un élément en polyuréthane, comprenant les étapes :
de fabrication de l'élément porteur,
d'amenée ou de déplacement de l'élément porteur dans une cavité ouverte d'un outil,
de fermeture de l'outil jusqu'à une position prédéterminée, sachant qu'une cavité agrandie avec une première taille est créée,
de production d'un vide jusqu'à une dépression prédéterminée dans la cavité agrandie de première taille, sachant que la pression ou la dépression dans la cavité est calculée,
de remplissage d'un matériau d'injection dans la cavité agrandie et
d'exécution d'une étape de compression parallèlement au remplissage et/ou à la suite du remplissage du matériau d'injection, sachant que la cavité est au moins légèrement réduite.

2. Procédé selon la revendication 1,
**caractérisé en ce que**
la fabrication de l'élément porteur est effectuéepar un procédé de moulage par injection ou de moulage par injection-compression.

3. Procédé selon la revendication 1 ou 2,
**caractérisé en ce qu'**
un matériau polyuréthane est employé en tant que matériau d'injection.

4. Procédé selon l'une des revendications 1 à 3,
**caractérisé en ce que**
le vide est produit pendant une durée définie.

5. Procédé selon l'une des revendications précédentes,
**caractérisé en ce que**
l'étape de compression est effectuée parallèlement ou avec une temporisation pour introduire le matériau d'injection.

6. Procédé selon l'une des revendications précédentes,
**caractérisé en ce que**
le moment de l'injection pour le matériau d'injection est lancé en fonction de la valeur de dépression.

7. Procédé selon l'une des revendications précédentes,
**caractérisé en ce que**
la procédure de compression est régulée ou commandée en fonction de la durée d'injection.

8. Procédé selon l'une des revendications précédentes,
**caractérisé en ce qu'**
un agent d'activation de la surface de l'élément porteur est introduit dans la cavité avant la production du vide.

9. Procédé selon l'une des revendications précédentes,
**caractérisé en ce que**
l'outil est ouvert d'une manière prédéterminée avant l'étape de compression à proprement parler.

10. Procédé selon l'une des revendications précédentes,
**caractérisé en ce que**
l'étape de compression est effectuée en fonction de la pression d'injection.

11. Procédé selon l'une des revendications précédentes,
**caractérisé en ce que**
l'étape de compression est effectuée en fonction du trajet et de la force.

12. Dispositif pour exécuter le procédé selon l'une des revendications 1 à 11,
comprenant une unité de fermeture (12, 14, 16) comprenant au moins une cavité, dans laquelle unélément porteur peut être introduit, ainsi qu'un dispositif pour injecter un matériau d'injection (26) dans la cavité de l'outil (20) au moins fermé partiellement, sachant que l'unité de fermeture (12, 14, 16) pour exécuter une étape de compression, est formée pendant et/ou après l'étape de compression,
**caractérisé en ce qu'**
un dispositif de vide (38) est prévu pour alimenter en dépression la cavité de l'outil (20) au moins fermé partiellement avant l'exécution de l'étape de compression,
qu'un capteur (42) est prévu pour calculer la dépression,
qu'un dispositif de commande et de régulation (40) est prévu, lequel est relié au capteur (42) et au dispositif de vide (38).
